# EUROPEAN PATENT SPECIFICATION

(11) **EP 3 435 647 B1**
(45) Date of publication and mention of the grant of the patent: **24.07.2019**
(21) Application number: 17183162.1
(22) Date of filing: 25.07.2017
(51) Int. Cl.: H04M 15/28, H04M 15/00, H04M 17/00, H04W 4/00, H04W 88/06

(54) **A COMMUNICATION DEVICE FOR CONTROLLING TRANSMISSIONS OVER A LOW-POWER WIDE-AREA (LPWA) COMMUNICATION NETWORK**
KOMMUNIKATIONSVORRICHTUNG ZUR STEUERUNG VON ÜBERTRAGUNGEN ÜBER EIN NIEDRIGENERGIEWEITVERKEHRSNETZWERK (LPWAN)
DISPOSITIF DE COMMUNICATION POUR COMMANDER DES TRANSMISSIONS DANS UN RÉSEAU DE COMMUNICATION À ZONE ÉTENDUE DE FAIBLE PUISSANCE (LPWA)

(43) Date of publication of application: 30.01.2019
(73) Proprietor: Deutsche Telekom AG, 53113 Bonn (DE); Giesecke+Devrient Mobile Security GmbH, 81677 München (DE)
(72) Inventor: SCHNIEDERS, Dominik, 52078 Aachen (DE); SPITZ, Stephan, 85757 Karlsfeld (DE)
(74) Representative: Patentship Patentanwaltsgesellschaft mbH

(56) References cited:
- EP-A1- 2 610 800
- US-A1- 2003 027 549
- DAVID M MONTEIRO ET AL: "A secure NFC application for credit transfer among mobile phones", COMPUTER, INFORMATION AND TELECOMMUNICATION SYSTEMS (CITS), 2012 INTERNATIONAL CONFERENCE ON, IEEE, 14 May 2012 (2012-05-14), pages 1-5, XP032188431, DOI: 10.1109/CITS.2012.6220369 ISBN: 978-1-4673-1549-4

## Description

### TECHNICAL FIELD

In general, the invention relates to the field of wireless communication networks. More specifically, the invention relates to communication devices, methods and communication systems based on Low-Power Wide-Area, LPWA, technology, in particular Narrowband loT, NB loT, technology.

### TECHNICAL BACKGROUND

Narrowband loT, NB loT, is a new technology standard, designed to broaden the future of loT connectivity. Ratified by the 3GPP, NB loT is starting to be deployed by mobile network operators across the globe. NB loT is a Low-Power Wide-Area, LPWA, technology, developed to enable efficient communication for massively distributed communication devices across wide geographical areas and deep within urban infrastructure. NB loT technology is ideal for communication devices that generate low data traffic, rely on batteries and typically have a long life cycle. A battery life of more than 10 years may be supported for a wide range of use cases.

Moreover, NB loT technology significantly improves the system capacity and spectrum efficiency, especially in deep coverage. Thus, NB loT technology can be used to connect simple communication devices, such as sensors, to drive new data streams, reduce operational costs and create new business models. Smart meters, smart bins, environmental monitoring and precision agriculture are just a few exemplary applications of NB loT technology. Due to the limited hardware resources of communication devices based on LPWA technology and, in particular, NB loT technology, established mechanisms known, for instance, from smartphones may typically not be used for such communication devices. Thus, there is a need for improved communication devices, methods and communication systems based on LPWA technology, in particular NB loT technology.

In EP 2 610 800 A1, multi-party transactions with static and/or dynamic rules management mediated by one or more NFC-enabled devices is disclosed. An NFC-enabled mobile device can receive and distribute virtual money in accordance with rules and constraints supplied by an issuer of a value stored in the NFC-enabled mobile device.

In US 2003/0027549 A1, a prepaid communication system is disclosed. A prepaid credit may be applied to use by a client in communication activity as well as for managing a prepaying scheme for the client. An activity monitoring unit may hold the client's credit data and may apply such credit to permit communication activity by the client.

In D. M. Monteiro et al., "A Secure NFC Application for Credit Transfer Among Mobile Phones", IEEE International Conference on Computer, Information, and Telecommunication Systems (CITS), 14 May 2012, a peer-to-peer based application is disclosed, which demonstrates the usage of NFC and Bluetooth technologies for money transactions between mobile devices.

### SUMMARY

It is an object of the invention to provide improved communication devices, methods and communication systems for controlling transmissions over a Low-Power Wide-Area, LPWA, communication network.

The foregoing and other objects are achieved by the subject matter of the independent claims. Further implementation forms are apparent from the dependent claims, the description and the figures.

The invention is based on the finding that transmissions over the LPWA communication network may be enable or disabled by a communication device based on a credit counter value stored within the communication device. The credit counter may represent a credit used for transmitting data over the LPWA communication network. The communication device may communicate with a further communication device, such as a smartphone, which may be used to purchase the credit via an application store, which may generate a credit counter increment signal indicating an increment value of the credit counter value, and which may transmit the credit counter increment signal to the communication device, e.g. via a Near-Field Communication, NFC, communication link. Furthermore, the communication device may be operated out-of-the-box without a prior conclusion of a contract between a user of the communication device and a mobile network operator, MNO.

According to a first aspect, the invention relates to a communication device for communicating over a Low-Power Wide-Area, LPWA, communication network. The communication device comprises a memory configured to store a credit counter value, a first communication interface configured to receive a credit counter increment signal, wherein the credit counter increment signal indicates an increment value of the credit counter value, a second communication interface configured to communicate over the LPWA communication network, and a control element configured to control transmissions of the second communication interface, wherein the control element is configured to increment the credit counter value by the increment value, to compare the credit counter value with a reference credit counter value, and to enable transmissions of the second communication interface, if the credit counter value exceeds the reference credit counter value. The control element may not be configured to control receptions of the second communication interface.

In an implementation form, the control element is configured to disable transmissions of the second communication interface, if the credit counter value does not exceed the reference credit counter value.

In an implementation form, the control element is configured to determine a data volume of data transmitted via the second communication interface over the LPWA communication network, to determine a decrement value of the credit counter value based on the data volume, and to decrement the credit counter value by the decrement value.

In an implementation form, the control element is configured to determine a duration of a data transmission via the second communication interface over the LPWA communication network, to determine a decrement value of the credit counter value based on the duration, and to decrement the credit counter value by the decrement value.

In an implementation form, the communication device further comprises an application processor configured to execute an application program, wherein the application processor is configured to communicate via the second communication interface over the LPWA communication network.

In an implementation form, the communication device further comprises a security enclave configured to authenticate the communication device within the LPWA communication network, wherein the security enclave is configured to communicate via the second communication interface over the LPWA communication network.

The security enclave may hold or store network authentication credentials for registering and/or authenticating the communication device within the LPWA communication network. The security enclave may further be configured to identify the communication device within the LPWA communication network. The security enclave may comprise the memory of the communication device, and/or the control element of the communication device.

In an implementation form, the first communication interface is a Near-Field Communication, NFC, communication interface, and wherein the first communication interface is configured to receive the credit counter increment signal over a Near-Field Communication, NFC, communication link.

In an implementation form, the control element is configured to generate a credit counter status signal, wherein the credit counter status signal indicates the credit counter value, and wherein the second communication interface is configured to transmit the credit counter status signal over the LPWA communication network.

In an implementation form, the second communication interface is configured to receive a credit counter set signal over the LPWA communication network, wherein the credit counter set signal indicates an update credit counter value, and wherein the control element is configured to set the credit counter value in the memory to the update credit counter value.

According to a second aspect, the invention relates to a communication system for communicating over a Low-Power Wide-Area, LPWA, communication network. The communication system comprises a communication device according to the first aspect of the invention, and a further communication device configured to generate the credit counter increment signal, and to transmit the credit counter increment signal to the communication device. The further communication device may e.g. communicate with an application store for purchasing a credit, and to generate the credit counter increment signal based on the purchased credit.

In an implementation form, the further communication device is configured to transmit the credit counter increment signal to the communication device over a Near-Field Communication, NFC, communication link. For this purpose, the further communication device may comprise a Near-Field Communication, NFC, communication interface.

In an implementation form, the further communication device is a smartphone. Alternatively, the further communication device is a smartwatch.

In an implementation form, the communication system further comprises a network entity configured to receive a credit counter status signal from the communication device over the LPWA communication network, wherein the credit counter status signal indicates the credit counter value, and to store the credit counter value. The network entity may be a server.

In an implementation form, the network entity is configured to generate a credit counter set signal, wherein the credit counter set signal indicates an update credit counter value, and to transmit the credit counter set signal to the communication device over the LPWA communication network.

In an implementation form, the network entity is implemented within a home location register, HLR, or an authentication center, AuC, of the LPWA communication network. The home location register, HLR, and the authentication center, AuC, may be arranged within a core network of a mobile network operator, MNO.

According to a third aspect, the invention relates to a method for operating a communication device for communicating over a Low-Power Wide-Area, LPWA, communication network, wherein the communication device comprises a memory, a first communication interface, a second communication interface, and a control element. The memory is configured to store a credit counter value. The second communication interface is configured to communicate over the LPWA communication network. The control element is configured to control transmissions of the second communication interface. The method comprises receiving, by the first communication interface, a credit counter increment signal, wherein the credit counter increment signal indicates an increment value of the credit counter value, incrementing, by the control element, the credit counter value by the increment value, comparing, by the control element, the credit counter value with a reference credit counter value, and enabling, by the control element, transmissions of the second communication interface, if the credit counter value exceeds the reference credit counter value.

The method may be performed by the communication device. Further features of the method directly result from the features or the functionality of the communication device.

According to a fourth aspect, the invention relates to a computer program comprising a program code for performing the method according to the third aspect of the invention, when the computer program is executed by a communication device.

The invention can be implemented in hardware and/or software.

### BRIEF DESCRIPTION OF THE FIGURES

Implementation forms of the invention will be described with respect to the following figures, in which:
Fig. 1 shows a schematic diagram of a communication device for communicating over a Low-Power Wide-Area, LPWA, communication network;
Fig. 2 shows a schematic diagram of a communication system for communicating over a Low-Power Wide-Area, LPWA, communication network;
Fig. 3 shows a schematic diagram of a method for operating a communication device for communicating over a Low-Power Wide-Area, LPWA, communication network; and
Fig. 4 shows a schematic diagram of a communication system for communicating over a Low-Power Wide-Area, LPWA, communication network.

### DETAILED DESCRIPTION OF THE FIGURES

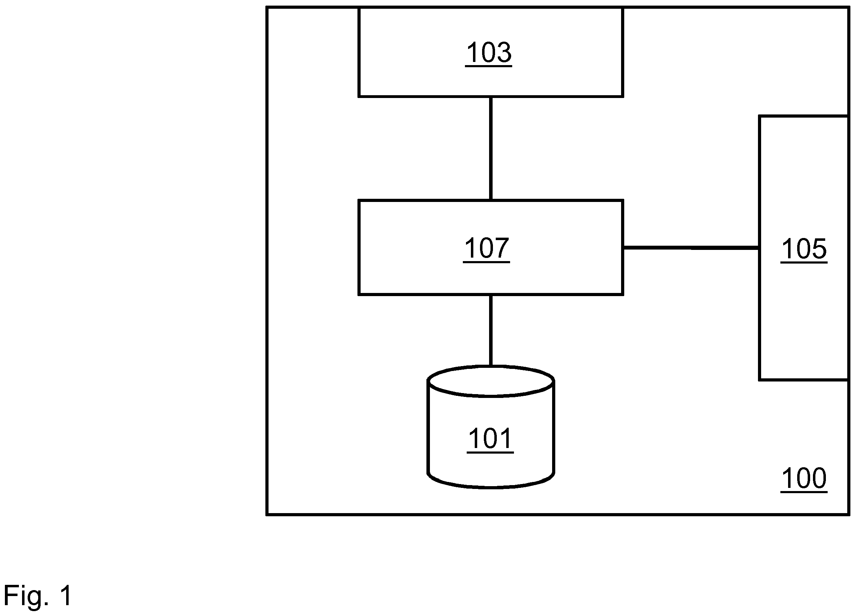

Fig. 1 shows a schematic diagram of a communication device 100 for communicating over a Low-Power Wide-Area, LPWA, communication network. The communication device 100 comprises a memory 101 configured to store a credit counter value, a first communication interface 103 configured to receive a credit counter increment signal, wherein the credit counter increment signal indicates an increment value of the credit counter value, a second communication interface 105 configured to communicate over the LPWA communication network, and a control element 107 configured to control transmissions of the second communication interface 105, wherein the control element 107 is configured to increment the credit counter value by the increment value, to compare the credit counter value with a reference credit counter value, and to enable transmissions of the second communication interface 105, if the credit counter value exceeds the reference credit counter value.

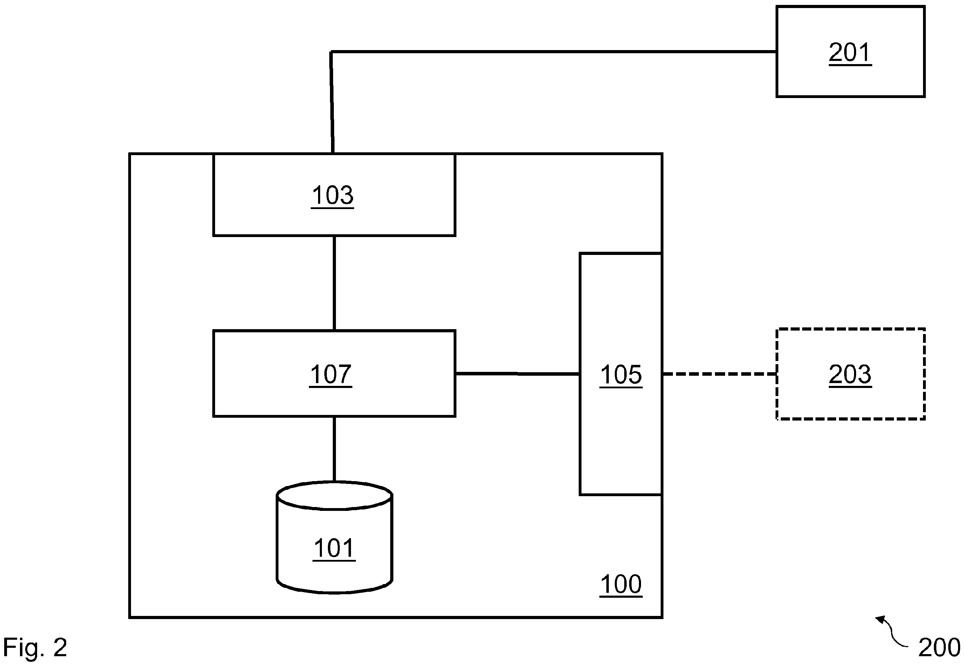

Fig. 2 shows a schematic diagram of a communication system 200 for communicating over a Low-Power Wide-Area, LPWA, communication network. The communication system 200 comprises a communication device 100. The communication device 100 comprises a memory 101 configured to store a credit counter value, a first communication interface 103 configured to receive a credit counter increment signal, wherein the credit counter increment signal indicates an increment value of the credit counter value, a second communication interface 105 configured to communicate over the LPWA communication network, and a control element 107 configured to control transmissions of the second communication interface 105, wherein the control element 107 is configured to increment the credit counter value by the increment value, to compare the credit counter value with a reference credit counter value, and to enable transmissions of the second communication interface 105, if the credit counter value exceeds the reference credit counter value. The communication system 200 further comprises a further communication device 201 configured to generate the credit counter increment signal, and to transmit the credit counter increment signal to the communication device 100. The communication system 200 may further comprise a network entity 203 configured to receive a credit counter status signal from the communication device 100 over the LPWA communication network, wherein the credit counter status signal indicates the credit counter value, and to store the credit counter value.

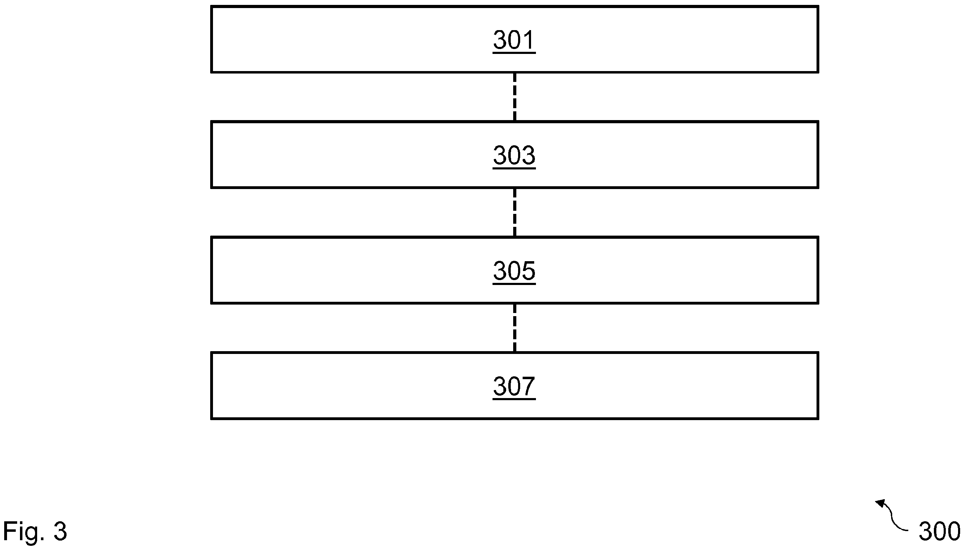

Fig. 3 shows a schematic diagram of a method 300 for operating a communication device for communicating over a Low-Power Wide-Area, LPWA, communication network, wherein the communication device comprises a memory, a first communication interface, a second communication interface, and a control element. The memory is configured to store a credit counter value. The second communication interface is configured to communicate over the LPWA communication network. The control element is configured to control transmissions of the second communication interface. The method 300 comprises receiving 301, by the first communication interface, a credit counter increment signal, wherein the credit counter increment signal indicates an increment value of the credit counter value, incrementing 303, by the control element, the credit counter value by the increment value, comparing 305, by the control element, the credit counter value with a reference credit counter value, and enabling 307, by the control element, transmissions of the second communication interface, if the credit counter value exceeds the reference credit counter value.

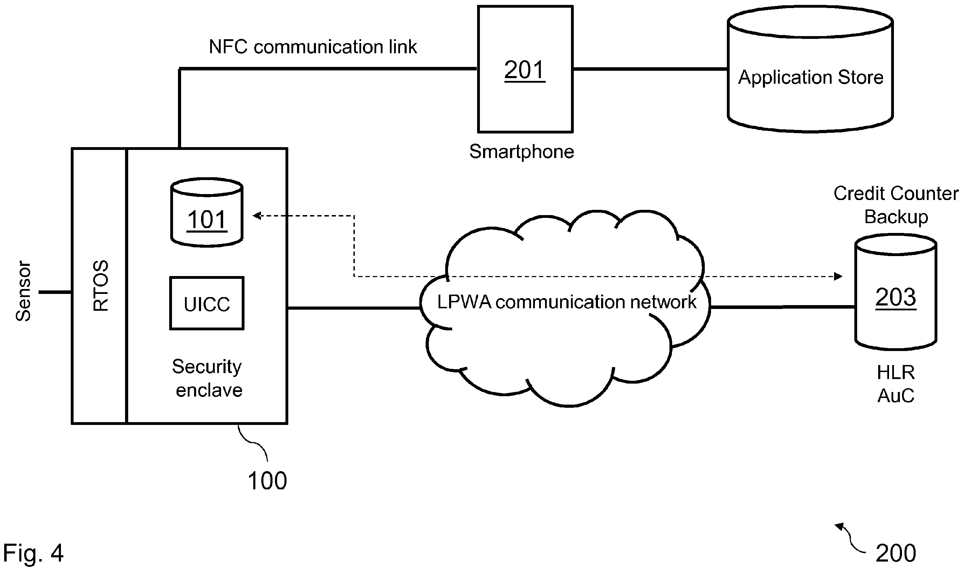

Fig. 4 shows a schematic diagram of a communication system 200 for communicating over a Low-Power Wide-Area, LPWA, communication network. The communication system 200 comprises a communication device 100. The communication device 100 comprises a memory 101 configured to store a credit counter value, a first communication interface configured to receive a credit counter increment signal, wherein the credit counter increment signal indicates an increment value of the credit counter value, a second communication interface configured to communicate over the LPWA communication network, and a control element configured to control transmissions of the second communication interface, wherein the control element is configured to increment the credit counter value by the increment value, to compare the credit counter value with a reference credit counter value, and to enable transmissions of the second communication interface, if the credit counter value exceeds the reference credit counter value. The control element is further configured to disable transmissions of the second communication interface, if the credit counter value does not exceed the reference credit counter value. The control element is further configured to determine a data volume of data transmitted via the second communication interface over the LPWA communication network, to determine a decrement value of the credit counter value based on the data volume, and to decrement the credit counter value by the decrement value. The communication device 100 further comprises a security enclave configured to authenticate the communication device 100 within the LPWA communication network, wherein the security enclave is configured to communicate via the second communication interface over the LPWA communication network. The security enclave comprises the memory 101 and the control element (not shown). The security enclave further holds or stores network authentication credentials for registering and/or authenticating the communication device 100 within the LPWA communication network. The security enclave may thus provide the functionality of a Universal Integrated Circuit Card, UICC, or a derivative thereof, for network authentication. The communication device 100 may operate a Real-Time Operating System, RTOS, and may communicate with an associated sensor for sensing a physical parameter, e.g. a temperature or an air pressure, in the surrounding of the communication device 100.

The communication system 200 further comprises a further communication device 201, e.g. a smartphone, configured to generate the credit counter increment signal, and to transmit the credit counter increment signal to the communication device 100 over a Near-Field Communication, NFC, communication link. The further communication device 200 may communicate with an application store for purchasing a credit, and to generate the credit counter increment signal based on the purchased credit. For this purpose, the further communication device 201 may execute a payment application.

The communication system 200 further comprises a network entity 203 configured to receive a credit counter status signal from the communication device 100 over the LPWA communication network, wherein the credit counter status signal indicates the credit counter value, and to store the credit counter value. The stored credit counter value may serve as a backup of the credit counter value of the communication device 100 within the network entity 203. The network entity 203 is further configured to generate a credit counter set signal, wherein the credit counter set signal indicates an update credit counter value, and to transmit the credit counter set signal to the communication device 100 over the LPWA communication network. The update credit counter value may be equal to a previously stored credit counter value of the communication device 100 or may be used as an initial value of the credit counter value of the communication device 100. The network entity 203 may e.g. be implemented within a home location register, HLR, or an authentication center, AuC, of the LPWA communication network. The home location register, HLR, and the authentication center, AuC, may be arranged within a core network of a mobile network operator, MNO.

The presented concept allows for a communication device 100 of a user to establish a communication link over an LPWA communication network and to transmit data over the LPWA communication network without the need of a prior conclusion of a contract between the user of the communication device 100 and a mobile network operator, MNO.

The communication device 100 comprises the security enclave comprising the memory 101 configured to store a credit counter value, wherein the credit counter value may represent a credit for a certain data volume to be transmitted over the LPWA communication network, for a certain number of communication links to be established over the LPWA communication network, or for a certain duration of communication links to be established over the LPWA communication network. The security enclave further holds or stores the network authentication credentials for registering and/or authenticating the communication device 100 within the LPWA communication network. The security enclave may thus provide the functionality of a Universal Integrated Circuit Card, UICC, an integrated Universal Integrated Circuit Card, iUICC, or an embedded Universal Integrated Circuit Card, eUICC, for network authentication. In an implementation form, the security enclave uses an isolated compartment for holding or storing the network authentication credentials, and a further isolated compartment for the memory 101 storing the credit counter value. In an implementation form, the security enclave uses a further isolated compartment for the control element. The compartments may, however, also exchange data. The security enclave may e.g. be realized by means of an ARM TrustZone.

The security enclave, in particular the control element, may control the authentication of the communication device 100 within the LPWA communication network such that a communication link may only be established if the credit counter value exceeds the reference credit counter value. According to a first option, the network authentication credentials are blocked until the credit counter value has been updated and a corresponding value has been charged for the communication link. According to a second option, the transmission capabilities of the communication device 100 via the second communication interface are controlled using the security enclave, in particular the control element, and are blocked until the credit counter value has been updated and a corresponding value has been charged for the communication link.

The first communication interface, which may be a Near-Field Communication, NFC, communication interface, may be used for communicating with the further communication device 201. Using the further communication device 201, credit for the communication device 100 may be purchased via the application store. The purchased credit may consequently be transferred via the NFC communication link onto the communication device 100.

The credit counter value of the communication device 100 is additionally backed up within the network entity 203, which may be arranged within a core network of the mobile network operator, MNO. Therefore, manipulations and/or attacks on the credit counter value of the communication device 100 may be detected. According to one option, the backed up credit counter value within the home location register, HLR, within the core network is associated with an International Mobile Subscriber Identity, IMSI, of the communication device 100 and the credit counter value within the communication device 100 is regularly updated.

Consequently, the communication device 100 may be provided with a pre-paid credit and may be used immediately without additionally purchasing a Subscriber Identity Module, SIM, or concluding a contract with the mobile network operator, MNO. If the credit is used up, it can easily be recharged via the further communication device 201 and the application store.

### REFERENCE SIGNS

- 100: Communication device
- 101: Memory
- 103: First communication interface
- 105: Second communication interface
- 107: Control element

- 200: Communication system
- 201: Further communication device
- 203: Network entity

- 300: Method for operating a communication device
- 301: Receiving a credit counter increment signal
- 303: Incrementing the credit counter value
- 305: Comparing the credit counter value with a reference credit counter value
- 307: Enabling transmissions of the second communication interface

## Claims

1. A communication device (100) for communicating over a Low-Power Wide-Area, LPWA, communication network, the communication device (100) comprising:
a memory (101) configured to store a credit counter value;
a first communication interface (103) configured to receive a credit counter increment signal, wherein the credit counter increment signal indicates an increment value of the credit counter value;
a second communication interface (105) configured to communicate over the LPWA communication network; and
a control element (107) configured to control transmissions of the second communication interface (105), wherein the control element (107) is configured to increment the credit counter value by the increment value, to compare the credit counter value with a reference credit counter value, and to enable transmissions of the second communication interface (105), if the credit counter value exceeds the reference credit counter value.

2. The communication device (100) of claim 1, wherein the control element (107) is configured to disable transmissions of the second communication interface (105), if the credit counter value does not exceed the reference credit counter value.

3. The communication device (100) of any one of the preceding claims, wherein the control element (107) is configured to determine a data volume of data transmitted via the second communication interface (105) over the LPWA communication network, to determine a decrement value of the credit counter value based on the data volume, and to decrement the credit counter value by the decrement value.

4. The communication device (100) of any one of the preceding claims, further comprising:
a security enclave configured to authenticate the communication device (100) within the LPWA communication network, wherein the security enclave is configured to communicate via the second communication interface (105) over the LPWA communication network.

5. The communication device (100) of any one of the preceding claims, wherein the first communication interface (103) is a Near-Field Communication, NFC, communication interface, and wherein the first communication interface (103) is configured to receive the credit counter increment signal over a Near-Field Communication, NFC, communication link.

6. The communication device (100) of any one of the preceding claims, wherein the control element (107) is configured to generate a credit counter status signal, wherein the credit counter status signal indicates the credit counter value, and wherein the second communication interface (105) is configured to transmit the credit counter status signal over the LPWA communication network.

7. The communication device (100) of any one of the preceding claims, wherein the second communication interface (105) is configured to receive a credit counter set signal over the LPWA communication network, wherein the credit counter set signal indicates an update credit counter value, and wherein the control element (107) is configured to set the credit counter value in the memory (101) to the update credit counter value.

8. A communication system (200) for communicating over a Low-Power Wide-Area, LPWA, communication network, the communication system (200) comprising:
a communication device (100) of any one of the claims 1 to 7; and
a further communication device (201) configured to generate the credit counter increment signal, and to transmit the credit counter increment signal to the communication device (100).

9. The communication system (200) of claim 8, wherein the further communication device (201) is configured to transmit the credit counter increment signal to the communication device (100) over a Near-Field Communication, NFC, communication link.

10. The communication system (200) of any one of the claims 8 or 9, wherein the further communication device (201) is a smartphone.

11. The communication system (200) of any one of the claims 8 to 10, further comprising:
a network entity (203) configured to receive a credit counter status signal from the communication device (100) over the LPWA communication network, wherein the credit counter status signal indicates the credit counter value, and to store the credit counter value.

12. The communication system (200) of claim 11, wherein the network entity (203) is configured to generate a credit counter set signal, wherein the credit counter set signal indicates an update credit counter value, and to transmit the credit counter set signal to the communication device (100) over the LPWA communication network.

13. The communication system (200) of any one of the claims 11 or 12, wherein the network entity (203) is implemented within a home location register, HLR, or an authentication center, AuC, of the LPWA communication network.

14. A method (300) for operating a communication device (100) for communicating over a Low-Power Wide-Area, LPWA, communication network, wherein the communication device (100) comprises a memory (101), a first communication interface (103), a second communication interface (105), and a control element (107), wherein the memory (101) is configured to store a credit counter value, wherein the second communication interface (105) is configured to communicate over the LPWA communication network, wherein the control element (107) is configured to control transmissions of the second communication interface (105), the method (300) comprising:
receiving (301), by the first communication interface (103), a credit counter increment signal, wherein the credit counter increment signal indicates an increment value of the credit counter value;
incrementing (303), by the control element (107), the credit counter value by the increment value;
comparing (305), by the control element (107), the credit counter value with a reference credit counter value; and
enabling (307), by the control element (107), transmissions of the second communication interface (105), if the credit counter value exceeds the reference credit counter value.

15. A computer program comprising a program code for performing the method (300) of claim 14, when the computer program is executed by a communication device (100).

## Patentansprüche

1. Kommunikationsvorrichtung (100) zur Kommunikation über ein Niedrigenergieweitverkehr-, LPWA-, Kommunikationsnetzwerk, die Kommunikationsvorrichtung (100) umfassend:
einen Speicher (101) der dafür eingerichtet ist, einen Guthabenzählerwert zu speichern;
eine erste Kommunikationsschnittstelle (103), die dafür eingerichtet ist, ein Guthabenzähler-Inkrementsignal zu empfangen, wobei das Guthabenzähler-Inkrementsignal einen Inkrementwert des Guthabenzählerwerts angibt;
eine zweite Kommunikationsschnittstelle (105), die dafür eingerichtet ist, über das LPWA-Kommunikationsnetzwerk zu kommunizieren; und
ein Steuerungselement (107), das dafür eingerichtet ist, Übertragungen der zweiten Kommunikationsschnittstelle (105) zu steuern, wobei das Steuerungselement (107) dafür eingerichtet ist, den Guthabenzählerwert um den Inkrementwert zu inkrementieren, den Guthabenzählerwert mit einem Bezugsguthabenzählerwert zu vergleichen, und Übertragungen der zweiten Kommunikationsschnittstelle (105) zu ermöglichen, wenn der Guthabenzählerwert den Bezugsguthabenzählerwert überschreitet.

2. Kommunikationsvorrichtung (100) nach Anspruch 1, wobei das Steuerungselement (107) dafür eingerichtet ist, Übertragungen der zweiten Kommunikationsschnittstelle (105) zu unterbinden, wenn der Guthabenzählerwert den Bezugsguthabenzählerwert nicht überschreitet.

3. Kommunikationsvorrichtung (100) nach einem der vorhergehenden Ansprüche, wobei das Steuerungselement (107) dafür eingerichtet ist, ein Datenvolumen von Daten zu bestimmen, die mittels der zweiten Kommunikationsschnittstelle (105) über das LPWA-Kommunikationsnetzwerk übertragen werden, einen Dekrementwert des Guthabenzählerwerts auf Grundlage des Datenvolumens zu bestimmen und den Guthabenzählerwert um den Dekrementwert zu dekrementieren.

4. Kommunikationsvorrichtung (100) nach einem der vorhergehenden Ansprüche, ferner umfassend:
eine Sicherheitsenklave, die dafür eingerichtet ist, die Kommunikationsvorrichtung (100) innerhalb des LPWA-Kommunikationsnetzwerks zu authentifizieren, wobei die Sicherheitsenklave dafür eingerichtet ist, mittels der zweiten Kommunikationsschnittstelle (105) über das LPWA-Kommunikationsnetzwerk zu kommunizieren.

5. Kommunikationsvorrichtung (100) nach einem der vorhergehenden Ansprüche, wobei die erste Kommunikationsschnittstelle (103) eine Nahfeldkommunikations-, NFC-, Schnittstelle ist und wobei die erste Kommunikationsschnittstelle (103) dafür eingerichtet ist, das Guthabenzähler-Inkrementsignal über eine Nahfeldkommunikations-, NFC-, Kommunikationsverbindung zu empfangen.

6. Kommunikationsvorrichtung (100) nach einem der vorhergehenden Ansprüche, wobei das Steuerungselement (107) dafür eingerichtet ist, ein Guthabenzähler-Statussignal zu erzeugen, wobei das Guthabenzähler-Statussignal den Guthabenzählerwert angibt und wobei die zweite Kommunikationsschnittstelle (105) dafür eingerichtet ist, das Guthabenzähler-Statussignal über das LPWA-Kommunikationsnetzwerk zu übertragen.

7. Kommunikationsvorrichtung (100) nach einem der vorhergehenden Ansprüche, wobei die zweite Kommunikationsschnittstelle (105) dafür eingerichtet ist, ein Guthabenzählersetzsignal über das LPWA-Kommunikationsnetzwerk zu empfangen, wobei das Guthabenzählersetzsignal einen Aktualisierungs-Guthabenzählerwert angibt und wobei das Steuerungselement (107) dafür eingerichtet ist, den Guthabenzählerwert im Speicher (101) auf den Aktualisierungs-Guthabenzählerwert zu setzen.

8. Kommunikationssystem (200) zur Kommunikation über ein Niedrigenergieweitverkehr-, LPWA-, Kommunikationsnetzwerk, das Kommunikationssystem (200) umfassend:
eine Kommunikationsvorrichtung (100) nach einem der Ansprüche 1 bis 7; und
eine weitere Kommunikationsvorrichtung (201), die dafür eingerichtet ist, das Guthabenzähler-Inkrementsignal zu erzeugen und das Guthabenzähler-Inkrementsignal an die Kommunikationsvorrichtung (100) zu übertragen.

9. Kommunikationssystem (200) nach Anspruch 8, wobei die weitere Kommunikationsvorrichtung (201) dafür eingerichtet ist, das Guthabenzähler-Inkrementsignal über eine Nahfeldkommunikations-, NFC-, Kommunikationsverbindung an die Kommunikationsvorrichtung (100) zu übertragen.

10. Kommunikationssystem (200) nach einem der Ansprüche 8 oder 9, wobei die weitere Kommunikationsvorrichtung (201) ein Smartphone ist.

11. Kommunikationssystem (200) nach einem der Ansprüche 8 bis 10, ferner umfassend:
eine Netzwerkeinheit (203), die dafür eingerichtet ist, ein Guthabenzähler-Statussignal über das LPWA-Kommunikationsnetzwerk von der Kommunikationsvorrichtung (100) zu empfangen, wobei das Guthabenzähler-Statussignal den Guthabenzählerwert angibt, und den Guthabenzählerwert zu speichern.

12. Kommunikationssystem (200) nach Anspruch 11, wobei die Netzwerkeinheit (203) dafür eingerichtet ist, ein Guthabenzählersetzsignal zu erzeugen, wobei das Guthabenzählersetzsignal einen Aktualisierungs-Guthabenzählerwert angibt, und das Guthabenzählersetzsignal über das LPWA-Kommunikationsnetzwerk an die Kommunikationsvorrichtung (100) zu übertragen.

13. Kommunikationssystem (200) nach einem der Ansprüche 11 oder 12, wobei die Netzwerkeinheit (203) innerhalb eines Heimatortsregisters, HLR, oder eines Authentifizierungszentrums, AuC, des LPWA-Kommunikationsnetzwerks implementiert ist.

14. Verfahren (300) zum Betrieb einer Kommunikationsvorrichtung (100) zur Kommunikation über ein Niedrigenergieweitverkehr-, LPWA-, Kommunikationsnetzwerks, wobei die Kommunikationsvorrichtung (100) einen Speicher (101), eine erste Kommunikationsschnittstelle (103), eine zweite Kommunikationsschnittstelle (105) und ein Steuerungselement (107) umfasst, wobei der Speicher (101) dafür eingerichtet ist, einen Guthabenzählerwert zu speichern, wobei die zweite Kommunikationsschnittstelle (105) dafür eingerichtet ist, über das LPWA-Kommunikationsnetzwerk zu kommunizieren, wobei das Steuerungselement (107) dafür eingerichtet ist, Übertragungen der zweiten Kommunikationsschnittstelle (105) zu speichern, das Verfahren (300) umfassend:
Empfangen (301) eines Guthabenzähler-Inkrementsignals durch die erste Kommunikationsschnittstelle (103), wobei das Guthabenzähler-Inkrementsignal einen Inkrementwert des Guthabenzählerwerts angibt;
Inkrementieren (303) des Guthabenzählerwerts um den Inkrementwert durch das Steuerungselement (107);
Vergleichen (305) des Guthabenzählerwerts mit einem Bezugsguthabenzählerwert durch das Steuerungselement (107); und
Ermöglichen (307) von Übertragungen der zweiten Kommunikationsschnittstelle (105) durch das Steuerungselement (107), wenn der Guthabenzählerwert den Bezugsguthabenzählerwert überschreitet.

15. Computerprogramm umfassend einen Programmcode zur Durchführung des Verfahrens (300) nach Anspruch 14, wenn das Computerprogramm durch eine Kommunikationsvorrichtung (100) ausgeführt wird.

## Revendications

1. Dispositif de communication (100) pour communiquer sur un réseau de communication étendu, basse puissance, LPWA, le dispositif de communication (100) comprenant :
une mémoire (101) configurée pour stocker une valeur de compteur de crédits ;
une première interface de communication (103) configurée pour recevoir un signal d'incrémentation de compteur de crédits, où le signal d'incrémentation de compteur de crédits indique une valeur d'incrémentation de la valeur du compteur de crédits ;
une seconde interface de communication (105) configurée pour communiquer sur le réseau de communication LPWA ; et
un élément de commande (107) configuré pour commander des transmissions de la seconde interface de communication (105), où l'élément de commande (107) est configuré pour incrémenter la valeur du compteur de crédits de la valeur d'incrément, pour comparer la valeur du compteur de crédits à une valeur de compteur de crédits de référence, et pour permettre des transmissions de la seconde interface de communication (105), si la valeur du compteur de crédits dépasse la valeur du compteur de crédits de référence.

2. Dispositif de communication (100) selon la revendication 1, dans lequel l'élément de commande (107) est configuré pour désactiver les transmissions de la seconde interface de communication (105), si la valeur du compteur de crédits ne dépasse pas la valeur du compteur de crédits de référence.

3. Dispositif de communication (100) selon l'une quelconque des revendications précédentes, dans lequel l'élément de commande (107) est configuré pour déterminer un volume de données de données transmises par l'intermédiaire de la seconde interface de communication (105) sur le réseau de communication LPWA, pour déterminer une valeur de décrément de la valeur du compteur de crédits en fonction du volume de données, et pour décrémenter la valeur du compteur de crédits de la valeur de décrément.

4. Dispositif de communication (100) selon l'une quelconque des revendications précédentes, comprenant en outre :
une enclave de sécurité configurée pour authentifier le dispositif de communication (100) dans le réseau de communication LPWA, où l'enclave de sécurité est configurée pour communiquer par l'intermédiaire de la seconde interface de communication (105) sur le réseau de communication LPWA.

5. Dispositif de communication (100) selon l'une quelconque des revendications précédentes, dans lequel la première interface de communication (103) est une interface de communication en champ proche, NFC, et où la première interface de communication (103) est configurée pour recevoir le signal d'incrémentation du compteur de crédits sur une liaison de communication en champ proche, NFC.

6. Dispositif de communication (100) selon l'une quelconque des revendications précédentes, dans lequel l'élément de commande (107) est configuré pour générer un signal d'état de compteur de crédits, où le signal d'état de compteur de crédits indique la valeur du compteur de crédits, et où la seconde interface de communication (105) est configurée pour transmettre le signal d'état du compteur de crédits sur le réseau de communication LPWA.

7. Dispositif de communication (100) selon l'une quelconque des revendications précédentes, dans lequel la seconde interface de communication (105) est configurée pour recevoir un signal de réglage du compteur de crédits sur le réseau de communication LPWA, où le signal de réglage du compteur de crédits indique une valeur du compteur de crédits actualisée, et où l'élément de commande (107) est configuré pour régler la valeur du compteur de crédits dans la mémoire (101) à la valeur du compteur de crédits actualisée.

8. Système de communication (200) pour communiquer sur un réseau de communication étendu, basse puissance, LPWA, le système de communication (200) comprenant :
un dispositif de communication (100) selon l'une quelconque des revendications 1 à 7 ; et
un dispositif de communication supplémentaire (201) configuré pour générer le signal d'incrémentation du compteur de crédits, et pour transmettre le signal d'incrémentation du compteur de crédits au dispositif de communication (100).

9. Système de communication (200) selon la revendication 8, dans lequel le dispositif de communication supplémentaire (201) est configuré pour transmettre le signal d'incrémentation du compteur de crédits au dispositif de communication (100) sur une liaison de communication en champ proche, NFC.

10. Système de communication (200) selon l'une quelconque des revendications 8 ou 9, dans lequel le dispositif de communication supplémentaire (201) est un smartphone.

11. Système de communication (200) selon l'une quelconque des revendications 8 à 10, comprenant en outre :
une entité de réseau (203) configurée pour recevoir un signal d'état du compteur de crédits du dispositif de communication (100) sur le réseau de communication LPWA, où le signal d'état du compteur de crédits indique la valeur du compteur de crédits, et pour stocker la valeur du compteur de crédits.

12. Système de communication (200) selon la revendication 11, dans lequel l'entité de réseau (203) est configurée pour générer un signal de réglage du compteur de crédits, où le signal de réglage du compteur de crédits indique une valeur du compteur de crédits actualisée, et pour transmettre le signal de réglage du compteur de crédits au dispositif de communication (100) sur le réseau de communication LPWA.

13. Système de communication (200) selon l'une quelconque des revendications 11 ou 12, dans lequel l'entité de réseau (203) est mise en oeuvre dans un registre des abonnés nominaux, HLR, ou un centre d'authentification, AuC, du réseau de communication LPWA.

14. Procédé (300) pour faire fonctionner un dispositif de communication (100) pour communiquer sur un réseau de communication étendu, basse puissance, LPWA, où le dispositif de communication (100) comprend une mémoire (101), une première interface de communication (103), une seconde interface de communication (105), et un élément de commande (107), où la mémoire (101) est configurée pour stocker une valeur de compteur de crédits, la seconde interface de communication (105) étant configurée pour communiquer sur le réseau de communication LPWA, où l'élément de commande (107) est configuré pour commander des transmissions de la seconde interface de communication (105), le procédé (300) comprenant les étapes suivantes :
recevoir (301), par la première interface de communication (103), un signal d'incrémentation de compteur de crédits,
où le signal d'incrémentation du compteur de crédits indique une valeur d'incrémentation de la valeur du compteur de crédits ;
incrémenter (303), par l'élément de commande (107), la valeur du compteur de crédits de la valeur d'incrément ;
comparer (305), par l'élément de commande (107), la valeur du compteur de crédits à une valeur de compteur de crédits de référence ; et
permettre (307), par l'élément de commande (107), des transmissions de la seconde interface de communication (105), si la valeur du compteur de crédits dépasse la valeur de référence du compteur de crédits.

15. Programme d'ordinateur comprenant un code de programme pour exécuter le procédé (300) selon la revendication 14, lorsque le programme d'ordinateur est exécuté par un dispositif de communication (100).
